# EUROPÄISCHE PATENTANMELDUNG

(11) **EP 4 159 608 A1**
(43) Veröffentlichungstag der Anmeldung: **05.04.2023**
(21) Anmeldenummer: 22192675.1
(22) Anmeldetag: 29.08.2022
(51) Int. Cl.: B62K 21/18, B62K 21/22

(54) **FAHRRAD MIT EINEM FAHRRADRAHMEN UND EINER VORDERRADGABEL**

(30) Priorität: 30.09.2021 AT 1622021
(71) Anmelder: SIMPLON Fahrrad GmbH, 6971 Hard (AT)
(72) Erfinder: Schmeiser, Jonas, 87534 Oberstaufen (DE); Brandl, Yannick, 6867 Schwarzenberg (AT)
(74) Vertreter: Torggler & Hofmann Patentanwälte - Rankweil

(57) **Zusammenfassung**

Fahrrad (1) mit einem Fahrradrahmen (2) und einer Vorderradgabel (3), wobei ein Gabelschaft (4) der Vorderradgabel (3) durch einen Steuerrohrhohlraum (5) in einem Steuerrohr (6) des Fahrradrahmens (2) und durch eine Durchführöffnung (7) eines ringförmigen Steuerlagers (8) des Fahrrades (1) hindurchgeführt und mittels des Steuerlagers (8) im Steuerrohr (6) drehbar gelagert ist, und wobei ein Vorbau (9) zum Verbinden des Gabelschafts (4) mit einem Lenker (10) des Fahrrads (1) einen Klemmbereich (11) aufweist, mit dem der Vorbau (9) klemmend am Gabelschaft (4) befestigt ist, wobei ein Teilbereich (12) des Klemmbereichs (11) des Vorbaus (9) in der Durchführöffnung (7) des Steuerlagers (8) angeordnet ist.

## Beschreibung

Die vorliegende Erfindung betrifft ein Fahrrad mit einem Fahrradrahmen und einer Vorderradgabel, wobei ein Gabelschaft der Vorderradgabel durch einen Steuerrohrhohlraum in einem Steuerrohr des Fahrradrahmens und durch eine Durchführöffnung eines ringförmigen Steuerlagers des Fahrrades hindurchgeführt und mittels des Steuerlagers im Steuerrohr drehbar gelagert ist, und wobei ein Vorbau zum Verbinden des Gabelschafts mit einem Lenker des Fahrrads einen Klemmbereich aufweist, mit dem der Vorbau klemmend am Gabelschaft befestigt ist.

Bei Fahrrädern ist es üblich, den Lenker mittels eines Vorbaus mit dem Gabelschaft zu verbinden. Der Gabelschaft ist dabei Teil der Vorderradgabel und dient somit letztendlich der Verbindung des Vorderrades mit dem Lenker. Um Lenkbewegungen ausführen zu können, ist die Vordergabel mit ihrem Gabelschaft drehbar im Steuerrohr des Fahrradrahmens gelagert. Dies ist beim Stand der Technik bekannt und in zahlreichen Ausgestaltungsformen realisiert worden. Der Vorbau weist in der Regel einen Klemmbereich auf, mit dem der Vorbau klemmend am Gabelschaft befestigt ist. Zwischen dem oberen Ende des Steuerrohrs und damit des Fahrradrahmens und dem Klemmbereich des Lenkers befindet sich beim Stand der Technik meist ein Steuersatzdeckel. Je nachdem, wie weit der Vorbau in der Höhe über den Fahrradrahmen bzw. dessen Oberrohr überstehen soll, befinden sich dann beim Stand der Technik noch Abstandshalter zwischen dem Steuersatzdeckel und dem Vorbau.

Zur drehbaren Lagerung des Gabelschafts im Steuerhohlraum des Steuerrohrs werden in der Regel ringförmige Steuerlager verwendet. Zur Spielfreistellung des Gabelschafts im Steuerrohr wird meist ein Konusring zwischen den Gabelschaft und das Steuerlager eingedrückt.

Aufgabe der Erfindung ist es, eine besonders aerodynamisch günstige Anordnung des Vorbaus am Fahrradrahmen zu ermöglichen, ohne dabei Stabilität und Klemmkraft in der Verbindung zwischen Vorbau und Gabelschaft zu verschlechtern.

Zur Lösung dieser Aufgabe ist bei Fahrrädern der eingangs genannten Art erfindungsgemäß vorgesehen, dass ein Teilbereich des Klemmbereichs des Vorbaus in der Durchführöffnung des Steuerlagers angeordnet ist.

Durch die Erfindung wird es möglich, den Vorbau sehr flach und damit aerodynamisch günstig am Fahrradrahmen anzuordnen, ohne hierbei den Klemmbereich des Vorbaus gegenüber dem Stand der Technik verkleinern zu müssen. Dies wird möglich, da erfindungsgemäß ein Teilbereich des Klemmbereichs des Vorbaus in der Durchführöffnung des Steuerlagers und damit auch innerhalb des Steuerrohrs des Fahrradrahmens angeordnet ist. Somit ist bei einer gegenüber dem Stand der Technik verbesserten Aerodynamik gleichzeitig eine ausreichend feste Ausgestaltung der Klemmverbindung zwischen Vorbau und Gabelschaft möglich. Durch die Erfindung wird es möglich, einen besonders strömungsgünstigen Vorbau mit einer sehr geringen Stirnfläche und kontinuierlichen Übergängen für eine verbesserte Luftströmung im Bereich des gesamten Lenker- und Vorbaubereichs zu realisieren. Die Größe der Klemmfläche am Gabelschaft kann gegenüber dem Stand der Technik nahezu unverändert bleiben. Eine Spannungskonzentration am Gabelschaft wird dadurch vermieden.

Besonders günstig ist es, wenn der in der Durchführöffnung angeordnete Teilbereich des Klemmbereichs des Vorbaus zwischen dem Gabelschaft und dem Steuerlager angeordnet ist. Eine besonders bevorzugte Variante sieht vor, dass der in der Durchführöffnung des Steuerlagers angeordnete Teilbereich des Klemmbereichs des Vorbaus einen konusförmigen Abschnitt aufweist, welcher zum Teil in die Durchführöffnung des Steuerlagers hineinreicht. Hierbei ist wiederum günstigerweise vorgesehen, dass das Fahrrad eine Spannvorrichtung aufweist, welche den Vorbau zur Spielfreistellung des Gabelschaftes mit dem konusförmigen Abschnitt des Vorbaus in einer Längsrichtung des Gabelschaftes gegen das Steuerlager spannt.

Besonders bevorzugt ist vorgesehen, dass zumindest der gesamte Klemmbereich des Vorbaus, vorzugsweis der gesamte Vorbau, einstückig ausgebildet ist. Dies gilt insbesondere auch für bevorzugte Ausgestaltungsformen mit dem erwähnten konusförmigen Abschnitt. Der konusförmige Abschnitt ist somit bevorzugt einstückig am Klemmbereich des Vorbaus ausgeführt. Es sind aber auch andere Varianten denkbar, bei denen der konusförmige Abschnitt z.B. als separater, gegebenenfalls geschlitzter, Ring ausgeführt und dann auf den Klemmbereich des Vorbaus aufgesteckt wird.

Um den Vorbau mit seinem Klemmbereich klemmend am Gabelschaft befestigen zu können, sehen bevorzugte Varianten der Erfindung vor, dass der Klemmbereich geschlitzt ausgebildet ist. Besonders günstig ist es in diesem Zusammenhang, wenn im Klemmbereich des Vorbaus ein Schlitz ausgebildet ist und der Schlitz zum Teil in die Durchführöffnung des Steuerlagers hineinreicht.

Wie an sich bekannt, kann der Vorbau in seinem Inneren zumindest einen Kabelführungskanal zum Hindurchführen von Schalt- und/oder Bremskabeln durch den Vorbau aufweisen. Bei erfindungsgemäßen Ausgestaltungsformen ist hierbei aber günstigerweise vorgesehen, dass zumindest ein Mündungsbereich des Kabelführungskanals in der Durchführöffnung des Steuerlagers angeordnet ist. Bei diesen Ausgestaltungsformen wird der in der Durchführöffnung des Steuerlagers angeordnete Teilbereich des Klemmbereichs des Vorbaus also zusätzlich noch als Mündungsbereich des Kabelführungskanals genutzt, um so die Schalt- und/oder Bremskabel durch das Steuerlager bzw. dessen Durchführöffnung hindurchzuführen.

Im Sinne einer aerodynamisch besonders günstigen Ausgestaltungsform sehen erfindungsgemäße Varianten besonders bevorzugt vor, dass eine Oberseite des Vorbaus in einem Übergangsbereich zu einem mittelbar oder unmittelbar daran anschließenden Oberrohr des Fahrradrahmens mit einer Oberseite des Oberrohrs fluchtet. In anderen Worten ist somit günstigerweise vorgesehen, dass der Vorbau im Übergangsbereich nicht über das Oberrohr des Fahrradrahmens übersteht.

Besonders günstig ist es, wenn der Gabelschaft der Vorderradgabel mittels zumindest zwei Steuerlagern im Steuerrohr drehbar gelagert ist, und der Teilbereich des Klemmbereichs des Vorbaus in der Durchführöffnung des obersten der Steuerlager angeordnet ist.

Die erfindungsgemäße Technologie kann grundsätzlich bei sehr unterschiedlich ausgestalteten Fahrrädern umgesetzt werden. Aufgrund der aerodynamischen Vorzüge der Erfindung handelt es sich bei erfindungsgemäßen Fahrrädern aber besonders bevorzugt um Rennräder.

Die genannten Bauteile des erfindungsgemäßen Fahrrads können aus den, im Fahrradbau üblichen Materialien wie z.B. insbesondere aus Karbon, Aluminium, Stahl und so weiter hergestellt sein.

Weitere Merkmale und Einzelheiten bevorzugter Ausgestaltungsformen der Erfindung sind beispielhaft in der nachfolgenden Figurenbeschreibung erläutert. Es zeigen:
- Fig. 1: eine geschnittene Detaildarstellung zum gattungsgemäßen Stand der Technik;
- Fig. 2: eine Seitenansicht auf ein erfindungsgemäßes Fahrrad;
- Fig. 3: eine perspektivische Ansicht auf den Bereich des Vorbaus dieses Fahrrades aus Fig. 2;
- Fig. 4: einen Vertikalschnitt im Bereich der klemmenden Befestigung des Vorbaus am Gabelschaft des Fahrrads aus Fig. 2;
- Fig. 5 bis 8: verschiedene Ansichten auf ein erstes Ausführungsbeispiel eines gemäß der Erfindung ausgeführten Vorbaus;
- Fig. 9: eine ebenfalls erfindungsgemäße, alternative Ausgestaltungsform eines Vorbaus und
- Fig. 10 und 11: Darstellungen zu einer Spannvorrichtung mit der der Vorbau in Längsrichtung des Gabelschafts auf diesen gespannt werden kann.

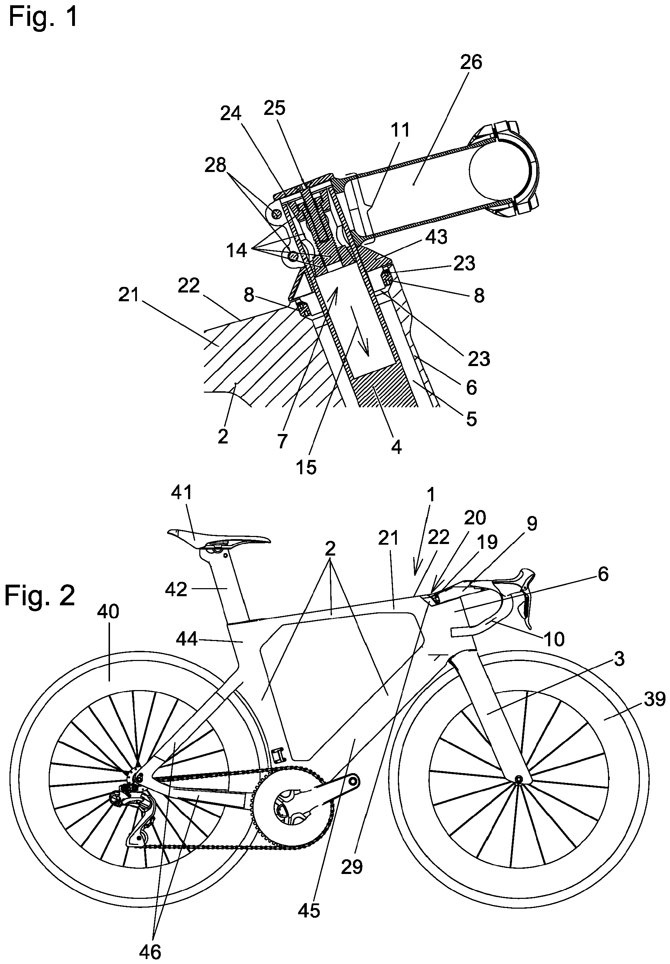

Fig. 1 zeigt somit den gattungsgemäßen Stand der Technik und damit die Art und Weise, wie heutzutage der Vorbau 26 in der Regel am Gabelschaft 4 befestigt wird. Man sieht in Fig. 1 gut, wie zwischen dem Klemmbereich 11 des gemäß des Standes der Technik ausgeführten Vorbaus 26 und dem oberen Ende des Steuerrohrs 6 des Fahrradrahmens 2 ein Steuersatzdeckel 43 angeordnet ist. Oft befindet sich zwischen dem Steuersatzdeckel 43 und der Unterkante des Vorbaus 26 noch eine entsprechende Anzahl von Abstandselementen, sogenannten Spacern. In Längsrichtung 15 wird der Vorbau 26 mittels einer weiter unten noch erläuterten, an sich bekannten Spannvorrichtung 14 in Längsrichtung 15 auf den Steuersatzdeckel 43 gespannt. Hierbei wird beim Stand der Technik ein gesonderter Konusring 23 in die Durchführöffnung 7 des Steuerlagers 8 hineingedrückt, wodurch eine Spielfreistellung des Gabelschafts 4 im Steuerrohr 6 erreicht wird. Die in Fig. 1 gezeigte, beim Stand der Technik bekannte Technologie ist an sich recht funktionstüchtig, der Klemmbereich 11 kann beim Stand der Technik so groß ausgeführt werden, dass der Vorbau 26 sicher am Gabelschaft 4 festgeklemmt werden kann. Diese, beim Stand der Technik an sich bekannte und in Fig. 1 gezeigte, Technologie hat aber den Nachteil, dass sie strömungstechnisch relativ ungünstig ist, da der Vorbau 26 samt Gabelschaft 4 relativ weit über die Oberseite 22 des Oberrohrs 21 des Fahrradrahmens 2 übersteht.

Fig. 2 zeigt nun ein erfindungsgemäßes Fahrrad 1, beispielhaft in Form eines Rennrades, bei dem es durch eine erfindungsgemäße Ausgestaltung möglich wird, den Vorbau 9 aerodynamisch günstig so anzuordnen, dass er zumindest im Übergangsbereich 20 vom Vorbau 9 zum Oberrohr 21 des Fahrradrahmens 2 mit seiner Oberseite 19 nicht mehr über die Oberseite 22 des Oberrohrs 21 übersteht. In diesem erfindungsgemäßen Ausführungsbeispiel ist somit vorgesehen, dass die Oberseite 19 des Vorbaus 9 in dem Übergangsbereich 20 zu dem hier mittelbar daran anschließenden Oberrohr 21 des Fahrradrahmens 2 mit einer Oberseite 22 des Oberrohrs 21 fluchtet. Zwischen dem Vorbau 9 gemäß Fig. 2 und dem Oberrohr 21 dieses Fahrradrahmens 2 befindet sich bei diesem Beispiel ein an sich bekannter Lenkanschlag 29. Dieser kann grundsätzlich auch entfallen. Dann ist günstigerweise vorgesehen, dass die Oberseite 19 des Vorbaus 9 in dem Übergangsbereich 20 zu dem unmittelbar daran anschließenden Oberrohr 21 des Fahrradrahmens 2 mit der Oberseite 22 des Oberrohrs 21 fluchtend angeordnet ist.

Ansonsten zeigt das Fahrrad aus Fig. 1 an sich bekannte Bauteile und deren Anordnung. Der Fahrradrahmen 2 weist zusätzlich zum Oberrohr 22 und zum Steuerrohr 6 auch ein Unterrohr 45 und ein Sattelrohr 44 auf. Aus dem Sattelrohr 44 ragt eine Sattelstütze 42 hervor, an der, wie an sich bekannt, der Sattel 41 befestigt ist. Am Hinterbau 46 des Fahrradrahmens 2 ist das Hinterrad 40 des Fahrrades 1 angeordnet. Das Vorderrad 39 hingegen ist in der Vorderradgabel 3 gehalten. Die Vorderradgabel 3 reicht mit ihrem in Fig. 2 nicht sichtbaren Gabelschaft 4 bis zum Vorbau 9, an welchem wiederum der Lenker 10 in an sich bekannter Art und Weise befestigt ist. Die Bremsen und der Antrieb mittels Tretkurbel, Zahnrädern und Schaltwerk kann wie beim Stand der Technik an sich bekannt ausgeführt werden und muss hier nicht weiter erläutert werden.

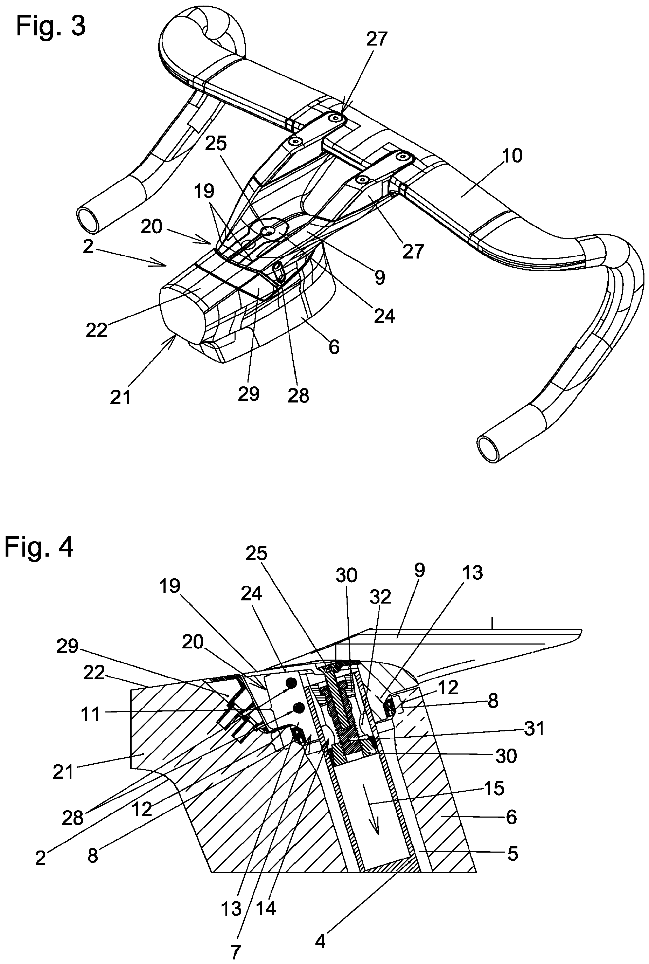

Fig. 3 zeigt nun eine Schrägsicht von oben auf den Bereich des Vorbaus 9 mit dem Lenker 10 des Fahrrades 1 aus Fig. 2. Man sieht auch hier, dass die Oberseite 19 des Vorbaus 9 in dem Übergangsbereich 20 mit der Oberseite 22 des Oberrohrs 21 des Fahrradrahmens 2 fluchtet, also nicht über die Oberseite 22 des Oberrohrs 21 übersteht. Die Lenkerbefestigung 27 des Lenkers 10 am Vorbau 9 kann unterschiedlich ausgeführt sein und ist hier nicht erfindungsrelevant.

In Fig. 4 ist nun anhand einer Schnittdarstellung die erfindungsgemäße Ausbildung des Fahrrades 1 aus Fig. 2 gezeigt. Zu sehen ist das Steuerrohr 6 des Fahrradrahmens 2 mit seinem innenliegenden Steuerrohrhohlraum 5 durch den der Gabelschaft 4 der Vorderradgabel 3 hindurchgeführt ist. Zur drehbaren Lagerung des Gabelschafts 4 im Steuerrohr 6 ist ein an sich bekanntes Steuerlager 8 vorgesehen. In der Regel ist zusätzlich noch ein weiteres, hier aber nicht explizit gezeigtes Steuerlager weiter unten im Steuerrohr 6 vorgesehen. Dies kann wie an sich bekannt ausgeführt werden. Der, als Verbindung zwischen dem Gabelschaft 4 und dem Lenker 10 dienende, Vorbau 9 weist einen Klemmbereich 11 auf, mit dem er klemmend am Gabelschaft 4 befestigt ist. Um eine möglichst gute Aerodynamik bzw. tiefstehende Anordnung des Vorbaus 9 erreichen zu können, ist erfindungsgemäß vorgesehen, dass der Teilbereich 12 des Klemmbereichs 11 des Vorbaus 9 in der Durchführöffnung 7 des ringförmig ausgebildeten Steuerlagers 8 angeordnet ist. Man könnte mit anderen Worten auch sagen, dass der Klemmbereich 11 des Vorbaus 9 mit seinem Teilbereich 12 in die Durchführöffnung 7 des Steuerlagers 8 hineinreicht, bzw. hier in diesem Ausführungsbeispiel vollständig durch die Durchführöffnung 7 hindurchgeführt ist. Hierdurch kann der Klemmbereich 11 im Sinne einer ausreichend stabilen Befestigung des Vorbaus 9 und damit des Lenkers 10 am Gabelschaft 4 relativ groß ausgebildet werden, ohne dass der Vorbau 9 dadurch sehr weit über die Oberseite 22 des Oberrohrs 21 des Fahrradrahmens 2 überstehen muss. Durch diese, teilweise in der Durchführöffnung 7 des Steuerlagers 8 versenkte Anordnung des Vorbaus 9 wird somit eine sehr gute Aerodynamik ermöglicht. Gleichzeitig kann aber auch der Klemmbereich 11 so groß ausgebildet werden, dass eine stabile klemmende Befestigung des Vorbaus 9 am Gabelschaft 4 sichergestellt ist.

In Fig. 4 ist auch gut zu sehen, dass, in bevorzugten Ausgestaltungsformen wie diesem, der in der Durchführöffnung 7 angeordnete Teilbereich 12 des Klemmbereichs 11 des Vorbaus 9 zwischen dem Gabelschaft 4 und dem Steuerlager 8 angeordnet ist. In diesem Ausführungsbeispiel sind der gesamte Vorbau 9 und damit insbesondere auch sein Klemmbereich 11 einstückig ausgebildet.

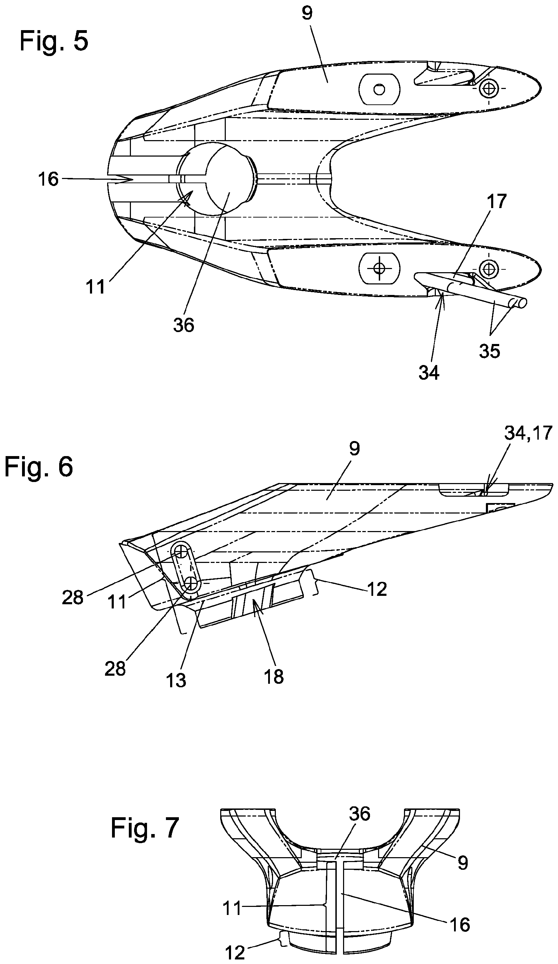

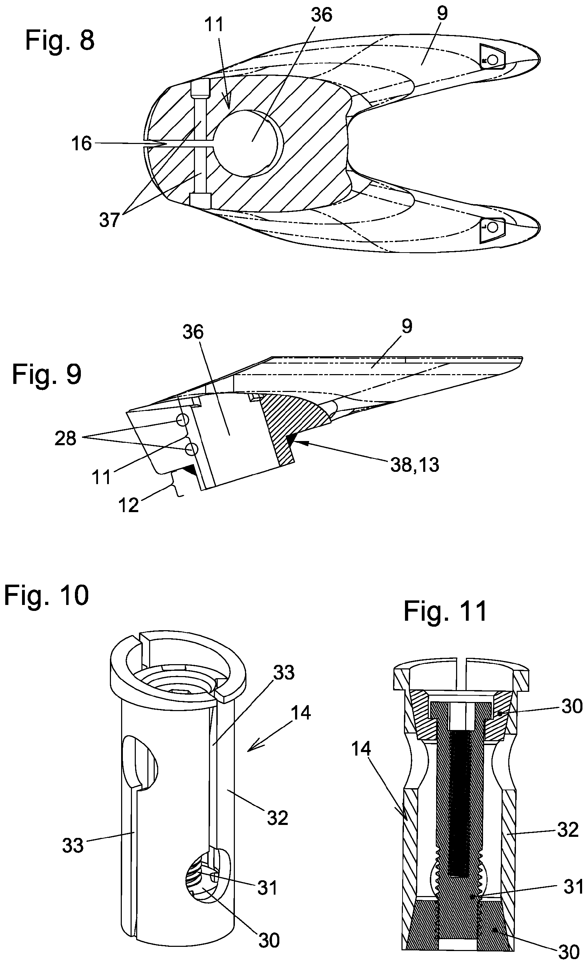

Der in der Durchführöffnung 7 angeordnete Teilbereich 12 des Klemmbereichs 11 des Vorbaus 9 weist in diesem Ausführungsbeispiel einen konusförmigen Abschnitt 13 auf, welcher zum Teil in die Durchführöffnung 7 des Steuerlagers 8 hineinreicht. Mittels der an sich bekannten Spannvorrichtung 14 wird der Vorbau 9 zur Spielfreistellung des Gabelschaftes 4 mit dem konusförmigen Abschnitt 13 des Vorbaus 9 in der Längsrichtung 15 des Gabelschaftes 4 gegen das Steuerlager 8 gespannt. Die hier verwendete Ausgestaltungsform der Spannvorrichtung 14 ist in Fig. 10 noch einmal in einer Außenansicht und in Fig. 11 noch einmal in einer Schnittdarstellung gezeigt. Die Spannvorrichtung 14 dieses Ausführungsbeispiels weist eine Spannvorrichtungshülse 32 mit Dehnschlitzen 33 auf. Innerhalb der Spannvorrichtungshülse 32 sind zwei Klemmkeile 30 angeordnet, welche mittels der Klemmkeilspannschraube 31 zueinander verspannt werden können, wodurch die Spannvorrichtungshülse 32 in ihrem Umfang ausgedehnt wird. Durch diese Ausdehnung wird die Spannvorrichtungshülse 32 im Gabelschaft 4 klemmend verankert, sodass dann zum Spannen des Vorbaus 9 auf das Steuerlager 8 in Längsrichtung 15 des Gabelschaftes 4 die Deckelspannschraube 25 in das entsprechende Innengewinde der Klemmkeilspannschraube 31 eingedreht wird. Die Deckelspannschraube 25 zieht hierdurch den auf dem Vorbau 9 abgestützten Spanndeckel 24 und damit den gesamten Vorbau 9 in Längsrichtung 15. Hierdurch wird in diesem Ausführungsbeispiel auch der konusförmige Abschnitt 13 des Vorbaus 9 in das Steuerlager 8 hineingedrückt, sodass es dadurch zu einer Spielfreistellung des Gabelschaftes 4 kommt. Die Fig. 5 bis 8 zeigen nun verschiedene Ansichten auf den erfindungsgemäß ausgebildeten Vorbau 9. In der Draufsicht gemäß Fig. 5 sieht man neben der Aufnahmeöffnung 36 für den Gabelschaft 4 auch den im Klemmbereich 11 ausgebildeten Schlitz 16, welcher mittels der Schlitzspannschrauben 28 so verengt werden kann, dass der Vorbau 9 mit seinem Klemmbereich 11 ausreichend fest am Gabelschaft 4 klemmend befestigt ist. In der Seitenansicht gemäß Fig. 6 sieht man den Teilbereich 12 des Klemmbereichs 11, mit dem der Vorbau 9 in der fertig montierten Stellung gemäß Fig. 4 in der Durchführöffnung 7 des Steuerlagers 8 angeordnet ist. Man sieht hier in Fig. 6 auch gut den konusförmigen Abschnitt 13. Fig. 7 zeigt den Vorbau 9 in einer Ansicht von hinten. Hier sind der Klemmbereich 11 und sein Teilbereich 12 sowie auch der Schlitz 16 zu sehen. Eine der Bohrungen 37 durch die eine der Schlitzspannschrauben 28 hindurchgeführt ist, sieht man gut in der Schnittdarstellung gemäß Fig. 8.

Auch bei diesem erfindungsgemäß ausgebildeten Fahrrad 1 weist der Vorbau 9 in seinem Inneren zumindest einen Kabelführungskanal 17 zum Hindurchführen von Schalt- und/oder Bremskabeln 35 durch den Vorbau 9 auf. Die Einführöffnung 34 dieses Kabelführungskanals 17 mit den eingeführten Schalt- und/oder Bremskabeln 35 ist in Fig. 5 gut zu sehen. Fig. 6 zeigt, dass günstigerweise vorgesehen ist, dass der Mündungsbereich 18 des Kabelführungskanals 17 im Teilbereich 12 des Klemmbereichs 11 des Vorbaus 9 ausgebildet ist. Dadurch ist dieser Mündungsbereich 18 im fertig montierten Zustand des Fahrrads 1 in der Durchführöffnung 7 des Steuerlagers 8 angeordnet. Auf diese Art und Weise können Schalt- und/oder Bremskabel 35 mit wenig Aufwand und sehr elegant durch das Steuerlager 8 hindurchgeführt werden. Diese Technologie kann somit dazu genutzt werden, um die Schalt- und/oder Bremskabel 35 über den Vorbau 9 in den Fahrradraum 2 einzuführen.

Während in dem bislang geschilderten Ausführungsbeispiel der Erfindung der konusförmige Abschnitt 13 einstückig am Vorbau 9 angeformt ist, zeigt Fig. 9 in einer teilweise geschnittenen Darstellung durch einen ebenfalls erfindungsgemäßen Vorbau 9, dass dies nicht zwingend so sein muss. Hier ist der konusförmige Abschnitt 13 als gesonderter Ring 38 ausgebildet, welcher auf den hier dann vollständig zylindermantelförmig ausgebildeten Teilbereich 12 aufgesteckt wird. Der Ring 38 ist günstigerweise an derselben Stelle geschlitzt ausgebildet wie der Vorbau 9. Dies ändert nichts an der Funktion des konusförmigen Abschnitts 13, wie sie anhand des ersten Ausführungsbeispiels bereits erläutert wurde.

Auch wenn dies hier nicht explizit gezeigt ist, so ist doch, wie weiter oben bereits geschildert, darauf hinzuweisen, dass der Gabelschaft 4 der Vorderradgabel 3 üblicherweise mittels zumindest zwei Steuerlagern 8 im Steuerrohr 6 drehbar gelagert ist. Bei diesen Varianten mit zumindest zwei Steuerlagern ist der Teilbereich 12 des Klemmbereichs 11 des Vorbaus 9 dann günstigerweise in der Durchführöffnung 7 des obersten der Steuerlager 8 angeordnet.

**Legende zu den Hinweisziffern:**

| | | | |
|---|---|---|---|
| 1 | Fahrrad | 30 | Klemmkeil |
| 2 | Fahrradrahmen | 31 | Klemmkeilspannschraube |
| 3 | Vorderradgabel | 32 | Spannvorrichtungshülse |
| 4 | Gabelschaft | 33 | Dehnschlitz |
| 5 | Steuerrohrhohlraum | 34 | Einführöffnung |
| 6 | Steuerrohr | 35 | Schalt- und/oder Bremskabel |
| 7 | Durchführöffnung | | |
| 8 | Steuerlager | 36 | Aufnahmeöffnung |
| 9 | Vorbau | 37 | Bohrung |
| 10 | Lenker | 38 | gesonderter Ring |
| 11 | Klemmbereich | 39 | Vorderrad |
| 12 | Teilbereich | 40 | Hinterrad |
| 13 | konusförmiger Abschnitt | 41 | Sattel |
| 14 | Spannvorrichtung | 42 | Sattelstütze |
| 15 | Längsrichtung | 43 | Steuersatzdeckel |
| 16 | Schlitz | 44 | Sattelrohr |
| 17 | Kabelführungskanal | 45 | Unterrohr |
| 18 | Mündungsbereich | 46 | Hinterbau |
| 19 | Oberseite | | |
| 20 | Übergangsbereich | | |
| 21 | Oberrohr | | |
| 22 | Oberseite | | |
| 23 | Konusring | | |
| 24 | Spanndeckel | | |
| 25 | Deckelspannschraube | | |
| 26 | Vorbau | | |
| 27 | Lenkerbefestigung | | |
| 28 | Schlitzspannschraube | | |
| 29 | Lenkanschlag | | |

## Patentansprüche

1. Fahrrad (1) mit einem Fahrradrahmen (2) und einer Vorderradgabel (3), wobei ein Gabelschaft (4) der Vorderradgabel (3) durch einen Steuerrohrhohlraum (5) in einem Steuerrohr (6) des Fahrradrahmens (2) und durch eine Durchführöffnung (7) eines ringförmigen Steuerlagers (8) des Fahrrades (1) hindurchgeführt und mittels des Steuerlagers (8) im Steuerrohr (6) drehbar gelagert ist, und wobei ein Vorbau (9) zum Verbinden des Gabelschafts (4) mit einem Lenker (10) des Fahrrads (1) einen Klemmbereich (11) aufweist, mit dem der Vorbau (9) klemmend am Gabelschaft (4) befestigt ist, **dadurch gekennzeichnet, dass** ein Teilbereich (12) des Klemmbereichs (11) des Vorbaus (9) in der Durchführöffnung (7) des Steuerlagers (8) angeordnet ist.

2. Fahrrad (1) nach Anspruch 1, **dadurch gekennzeichnet, dass** der in der Durchführöffnung (7) angeordnete Teilbereich (12) des Klemmbereichs (11) des Vorbaus (9) zwischen dem Gabelschaft (4) und dem Steuerlager (8) angeordnet ist.

3. Fahrrad (1) nach Anspruch 1 oder 2, **dadurch gekennzeichnet, dass** der in der Durchführöffnung (7) angeordnete Teilbereich (12) des Klemmbereichs (11) des Vorbaus (9) einen konusförmigen Abschnitt (13) aufweist, welcher zum Teil in die Durchführöffnung (7) des Steuerlagers (8) hineinreicht.

4. Fahrrad (1) nach Anspruch 3, **dadurch gekennzeichnet, dass** das Fahrrad (1) eine Spannvorrichtung (14) aufweist, welche den Vorbau (9) zur Spielfreistellung des Gabelschaftes (4) mit dem konusförmigen Abschnitt (13) des Vorbaus (9) in einer Längsrichtung (15) des Gabelschaftes (4) gegen das Steuerlager (8) spannt.

5. Fahrrad (1) nach einem der Ansprüche 1 bis 4, **dadurch gekennzeichnet, dass** zumindest der gesamte Klemmbereich (11) des Vorbaus (9), vorzugsweis der gesamte Vorbau (9), einstückig ausgebildet ist.

6. Fahrrad (1) nach einem der Ansprüche 1 bis 5, **dadurch gekennzeichnet, dass** im Klemmbereich (11) des Vorbaus (9) ein Schlitz (16) ausgebildet ist und der Schlitz (16) zum Teil in die Durchführöffnung (7) des Steuerlagers (8) hineinreicht.

7. Fahrrad (1) nach einem der Ansprüche 1 bis 6, **dadurch gekennzeichnet, dass** der Vorbau (9) in seinem Inneren zumindest einen Kabelführungskanal (17) zum Hindurchführen von Schalt- und/oder Bremskabeln (35) durch den Vorbau (9) aufweist, wobei zumindest ein Mündungsbereich (18) des Kabelführungskanals (17) in der Durchführöffnung (7) des Steuerlagers (8) angeordnet ist.

8. Fahrrad (1) nach einem der Ansprüche 1 bis 7, **dadurch gekennzeichnet, dass** eine Oberseite (19) des Vorbaus (9) in einem Übergangsbereich (20) zu einem mittelbar oder unmittelbar daran anschließenden Oberrohr (21) des Fahrradrahmens (2) mit einer Oberseite (22) des Oberrohrs (21) fluchtet.

9. Fahrrad (1) nach einem der Ansprüche 1 bis 8, **dadurch gekennzeichnet, dass** der Gabelschaft (4) der Vorderradgabel (3) mittels zumindest zwei Steuerlagern (8) im Steuerrohr (6) drehbar gelagert ist, und der Teilbereich (12) des Klemmbereichs (11) des Vorbaus (9) in der Durchführöffnung (7) des obersten der Steuerlager (8) angeordnet ist.

10. Fahrrad (1) nach einem der Ansprüche 1 bis 9, **dadurch gekennzeichnet, dass** es ein Rennrad ist.
